Europäisches Patentamt

European Patent Office

Office européen des brevets

(19)

(11) Publication number: **0 022 867**
**A1**

(12) # EUROPEAN PATENT APPLICATION

published in accordance with Art. 158(3) EPC

(21) Application number: **79900217.5**

(22) Date of filing: **17.01.79**

Data of the international application taken as a basis:

(86) International application number:
**PCT/JP79/00011**

(87) International publication number:
**WO80/01486**
International publication date:
**24.07.80**

(51) Int. Cl.³: **C 08 K 9/02**
**C 08 K 9/08, C 08 J 3/20**

(43) Date of publication of application:
**28.01.81 Bulletin 81/4**

(84) Designated Contracting States:
**DE FR GB**

(71) Applicant: **SASAKI, Masaru**
**385-6, Oaza Yasuhara Kamihigashi Shionoecho**
**Kagawa-gun Kagawa 761-16(JP)**

(72) Inventor: **SASAKI, Masaru**
**385-6, Oaza Yasuhara Kamihigashi Shionoecho**
**Kagawa-gun Kagawa 761-16(JP)**

(74) Representative: **Deufel, Paul et al,**
**Patentanwälte MÜLLER-BORé-DEUFEL SCHÖN-HERTEL**
**Siebertstrasse 4**
**D-8000 München 86(DE)**

(54) **METAL-CONTAINING SYNTHETIC RESIN MOLDING MATERIAL.**

(57) This metal-containing synthetic resin molding material is adapted to be used for sound- and vibration-proof molded products or the like. The metal-containing synthetic resin molding material is prepared by first mixing a metal powder having oxide layer or phosphate layer thereon, a dispersant comprising weak acidic salts of metals selected from the 2nd and 3rd groups of the periodic table, or kaolin, bentonite or the like, and a synthetic resin. The admixture is then heated under pressure, kneaded in molten state of the resin, and rapidly cooled down to thereby provide a synthetic resin molding material in granule form containing the uniformly dispersed metal therein.

Croydon Printing Company Ltd.

- 1 -

<u>1</u>

Technical Field

This invention relates to a metal-containing synthetic resin molding composition for use in the production of acoustical sound-proof members, vibration-proof materials, materials for absorbing audible and ultrasonic sounds, anti-cavitation materials, surface-lubricated materials, thermoelectric members, building materials, electronic and sound appliance parts and so on.

Background of the Art

It has been a difficult task to achieve a uniform dispersion of metal in a synthetic resin matrix. This is partly because these two materials are widely apart in polarity and have a little affinity for each other and partly because they are quite divergent in specific gravity.

This invention provides a metal-containing synthetic resin molding composition in which a metallic component has been uniformly dispersed in a synthetic resin and which ensures the maintenance of such a uniform dispersion even after the production of moldings therefrom.

## Disclosure of the Invention

This invention relates to a metal-containing synthetic resin molding material comprising a synthetic resin and a particulate metallic material as uniformly dispersed in said resin, the dispersion being available in small block form (such as pellet, flake or granule form).

The above-mentioned synthetic resin is most preferably a crystalline thermoplastic resin such as nylon, delrin, polyethylene, polyester, polyethylene therephthalate, polyvinylidene chloride, etc. Preferred are phenol, urea and other thermosetting resins. It may also be any of such other thermoplastic resins as polystyrene, polyvinyl chloride, acrylic resin and so on.

The metallic material is preferably aluminium, zinc, lead, gold, silver, copper, tin, MC alloy, solder alloy or the like. The metal material is used in particulate form. It is an essential requisite of this invention that such a metal is previously treated with an acid such as phosphoric acid, sulfuric acid or the like or an acidic salt thereof and dried to produce a metal oxide film or phosphate film on the surface. Along with such an acid treatment, a treatment with a boron-type or silane-type coupling agent may be performed. As a dispersing agent, it is preferable to employ one or more weak acid salts of elements of Groups 2 and 3 of Periodic Table of the Elements, such as the calcium, magnesium, zinc and aluminium salts of phosphoric acid, organic acids, carbonic acid and so on. Aside from these agents, kaolin, betonite, etc. also have dispersing effects.

The metal powder thus provided with a surface oxide or phosphate film is admixed with said synthetic resin, preferably together with said dispersing agent, and the mixture is melted and kneaded. Alternatively, said metal powder as such is kneaded with a previously fused mass of said synthetic resin. The kneading may be effected by means of a conventional kneader, co-kneader, high pressure kneader, roll kneader or the like, although the equipment disclosed in Japanese Patent Application No. 76128/1975 is most desirable. In both said cases, the kneading temperature is desirably over the melting point of the synthetic resin up to 50°C. Particularly in the case of thermosetting resin, the kneading time must not exceed 10 minutes. This is because any thermosetting resin molding material desirably should not be B-staged and, from this standpoint, the kneading of thermosetting resin is preferably carried out at low temperature and high pressure and completed in a short time. There are no particular such limitations in the case of thermosetting resins but, rather, it is most desirable to use along kneading time or carry out kneadings in repetition and with the interposition of a cooling step between kneadings.

In the kneading of a crystalline resin, it is more advantageous to add a crystallization nucleating agent such lead phosphate. The kneaded fused resin mass containing a filler metal is cooled and formed into small blocks, such as flakes, granules, etc. for example by means of a granulating machine. The above-mentioned cooling is most preferably effected by quenching, and it is desirable to cool the fused mass adiabatically or with the aid of water, a cooling medium or a freezing mixture. The resulting product, in the case of a crystalline resin, is such that resin crystals have been oriented about each particle of uniformly dispersed metal, with the lattice irregularities and defects being also evely dispersed and, therefore, that the product counters acoustic vibrations with the absorption of sound waves, slippage of grain boundaries, etc., thus functioning as a cushion against sounds and displaying excellent sound-proofing and vibration-proofing effects. It has also been found that the above product was well surface-lubricated. In the case of non-crystalline resins, the properties of the molding materials are inferior to those of crystalline compositions but they have been found to be superior to other known materials and can be regarded as having effects comparable to those of the above-mentioned product. A preferred composition comprises 5 to 50 weight parts of metal and 0,1 to 5 weight parts of dispersing agent in each 100 weight parts of synthetic resin. It is possible to incorporate such other additives as resin stabilizers, lubricants, antioxidants or aging inhibitors, ultraviolet absorbers, pigments and fillers such as fibers, clay minerals and so on.

Examples are given below.

Example 1

(Raw materials)

Resin:   Nylon -6 resin powder (Amilan CM1017) 100 wt. parts

Metal:   Zinc powder, crushed to 150 mesh or less, is immersed in 2% acetic acid for 30 minutes and dried at 120°C for 3 hours to obtain a grayed lead powder; 40 wt. parts.

Dispersing agent:   Calcium stearate powder; 0,1 wt. part (Production)

The above materials are heated to 230°C and kneaded in a kneading machine for 30 minutes. The kneaded batch is supplied to a revolving pan (5 r.p.m.) and granulated (pan temperature 100°C). The granules are discharged from the pan and, after cooling in water, the above operation is repeated.

(Properties)

The above compound was injection-molded at the resin temperature of 230°C to prepare a sample plate. The properties of this plate are shown in Table 1.

Example 2

(Raw materials)

Resin:   Same as Example 1, 100 wt. parts

Metal:   Tin powder, crushed to 200 mesh or less, is immersed in 5% HCl for 1 hour, washed with water and dried at 120°C for 3 hours to obtain a grayish white tin powder; 30 wt. parts.

Dispersing
agent:   Bentonite; 1.0 wt part

(Production)

The resulting compound was extrusion-molded into a sample plate at the die temperature of 220°C and cooled with water. This product had excellent acoustical properties. Thus, when it was used as a resonant plate in a musical instrument, an undistored resonance was obtained.

Example 3

(Raw materials)

Resin:   Novolac resin (formaldehyde-phenol
         ratio: 0,9)                                   100
         TCP                             .              6
         Calcium stearate                              1,5
         Red iron oxide                                 5
         Hexa                                          12

                          Total for resin    100 wt. parts

Metal:    Copper powder, crushed to 200 mesh or less, is
          immersed in 10% carbonic acid for 24 hours,
          washed with water and dried at 120°C for 2
          hours to obtain a delustered copper powder;
          5 wt. parts.

Dispersing

agent:    Magnesium stearate              0,2 wt. part
          Calcium carbonate               3,0 wt. parts

(Production)

The above compound is blended at room temperature for
30 minutes, rolled at a roll temperature of 100°C (15
r.p.m.) for 2 minutes, cooled with a cold blast of air
and cut into flakes.

(Properties)

The resin molded at 250°C in the same manner as Example 1
was found to have a large heat dissipation factor. When it
was formed into a sheet, the sheet displayed electrical
characteristics due to dispersed copper, i.e. both
electric conductivity and electric resistance. Therefore,
it can be expected to be useful as a plate-type heater.


Example 4

(Raw materials)

Resin:    Polyethylene resin (Marlex 50); 100 wt. parts

Metal:    MC alloy powder, crushed to 200 mesh or less,
          is immersed in 5% phosphoric acid for 1 hour,
          heated at 80°C for 1 hour,  washed with water
          and redried to obtain an MC alloy powder having
          a surface phosphate film.

Dispersing

agent:    Talc                            4,5 wt. parts
          Zinc stearate                   0,5 wt. part

(Production) -

To the resin melted at 140°C is added the above metal and the mixture is processed with the equipment disclosed in Japanese Patent Application No. 76123/1975.

(Properties)

The above product was extruded through dies into a plate at a cylinder temperature of 200°C. The product was cooled in the mold and discharged to obtain a sample piece. The properties of this sample are shown in Table 3.


Example 5

(Raw materials)

| | | |
|---|---|---|
| Resin: | Vinyl chloride-vinylidene chloride copolymer (Zeon 205) | 100 |
| | TOP | 12 |
| | Dibasic lead phosphite | 3 |
| | Carnauva wax | 0,5 |
| | Titanium white | 1 |
| | Total for resin | 100 wt. parts |

Metal: Aluminium powder, crushed to 200 mesh or less, is immersed in 10% aqueous carbonic acid for 2 hours, washed with water and dried at 120°C for 2 hours to obtain a grayed aluminium powder; 10 wt. parts.

(Production)

The above powders are dry-blended in a Henschel mixer and after kneading at 90°C, the mixture is extruded into a product with a diameter of 5 mm. The product is passed through a refrigerator and cut to size.

(Properties)

The above product was formed into a plate at a die temperature of 180°C in the same manner as Example 1. This plate had an excellent heat dissipation factor and excellent sound insulation effects (sound absorbing and sound shielding effects), for instance.

Vibration-damping tests on the vibration-damping materials produced in Example 1.

(Summarized)

1. The damping values obtained in the condition of a beam supported at one end for nylon (natural), pB 8% and pB 18%

|  | Ny (natural) | Pb 8% | Pb 18% |
|---|---|---|---|
| Attenuation constant C (kg S/cm) | $4,52 \times 10^{-4}$ | $8,61 \times 10^{-4}$ | $1,20 \times 10^{-3}$ |
| Ratio | 1 | 1,90 | 2,65 |
| Log damping coefficient $\delta$ | 0,164 | 0,253 | 0,255 |
| Ratio | 1 | 1,54 | 1,55 |

2. The damping values obtained with changes of mass at the free end of a beam supported at one end for Pb 18%

| Load (gr) | 0 | 12,6 | 33,0 | 63,2 | 137,7 | 293,9 |
|---|---|---|---|---|---|---|
| No. of Vibrations (Hz) | 30,6 | 23,8 | 19,0 | 15,6 | 11,8 | 8,4 |
| Attenuation constant C (Kg S/cm) | $1,40 \times 10^{-3}$ | $1,09 \times 10^{-3}$ | $1,36 \times 10^{-3}$ | $1,35 \times 10^{-3}$ | $1,66 \times 10^{-3}$ | $2,12 \times 10^{-3}$ |
| Log damping coefficient $\delta$ | 0,339 | 0,334 | 0,354 | 0,328 | 0,339 | 0,344 |

Specimens of different sizes were used between tests 1 and 2 due to the load factor and the apparent differences noted in attenuation constant C and logarithmic damping factor $\delta$ under no load are attributable to the difference in size and irrelevant to the purpose of the tests.

The vibration-damping products produced by dispersing lead powder uniformly into synthetic resin or crystalline resin in the above-described manner exhibit extraordinarily high damping effects.

Damping test with the vibration-damping products produced in Example 4.

3. Comparison between iron (Fe) and nylon resin and those containing MC alloy powder (wt. %); accelerated test in the condition of a beam supported at one end

Results of damping test

| | SS41 (Fe) | Ny. MC (8%) | Ny. MC (18%) |
|---|---|---|---|
| Vibration-absorbing characteristic $Q^{-3}$ | 0,00109 | 0,0247 | 0,0435 |
| Ratio | 1 | 23,5 | 39,9 |
| Log damping coefficient | 0,00592 | 0,1122 | 0,196 |
| Ratio | 1 | 22,5 | 33,1 |
| Specific damping capacity, S.D.C. | 1,11% | 26,3% | 32,4% |
| Ratio | 1 | 19,6 | 39,2 |

- 10 -

It will be apparent from the above table that the anti-damping products fabricated by dispersing MC alloy powder uniformly into nylon resin have higher damping (attenuation) effects. Thus, these products are expected to be of use as vibration-damping materials.

What is claimed is:

A metal-containing synthetic resin molding composition characterized in that said molding composition is prepared by admixing a particulate metal having a previously formed oxide surface film or a particulate metal surface-treated so as to provide an oxide or phosphate surface film, a dispersing agent such as a weak acid salt of an element of Group 2 or 3 of Periodic Table of the Elements, kaolin or bentonite and a synthetic resin, melting and kneading the mixture at elevated temperature and pressure and quenching the molten mixture to obtain a uniform dispersion of said particulate metal in said synthetic resin in the form of small-sized blocks.

# INTERNATIONAL SEARCH REPORT

0022867

International Application No PCT/JP79/00011

## I. CLASSIFICATION OF SUBJECT MATTER (if several classification symbols apply, indicate all) [3]

According to International Patent Classification (IPC) or to both National Classification and IPC

C 08 K 9/02, C 08 K 9/08, C 08 J 3/20

## II. FIELDS SEARCHED

### Minimum Documentation Searched [4]

| Classification System | Classification Symbols |
|---|---|
| I P C<br>I P C | C 08 K 9/02, C 08 K 9/08, C 08 J 3/20<br>C 08 K 3/08 |

Documentation Searched other than Minimum Documentation
to the Extent that such Documents are Included in the Fields Searched [5]

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| A | JP, A, 51-73040, 1976-6-24<br>NIPPON ZEON CO., LTD. | 1 |
| A | JP, B1, 45-29104, 1960-9-22<br>KABUSHIKI KAISHA TOKYO THREE-BOND | 1 |
| A | JP, A, 52-33935, 1977-3-15<br>NIPPON ZEON CO., LTD. | 1 |
| A | US, A, 3,491,056, 1970-1-20<br>THE DOW CHEMICAL CO. | 1 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [2] | Date of Mailing of this International Search Report [2] |
|---|---|
| May 15, 1979 (15.05.79) | May 28, 1979 (28.05.79) |
| International Searching Authority [1]<br>Japanese Patent Office | Signature of Authorized Officer [20] |

Form PCT/ISA/210 (second sheet) (October 1977)